# EUROPEAN PATENT SPECIFICATION

(11) **EP 1 325 677 B1**
(45) Date of publication and mention of the grant of the patent: **16.01.2008**
(21) Application number: 02102784.2
(22) Date of filing: 17.12.2002
(51) Int. Cl.: A01F 15/08, A01F 15/14

(54) **Knotter drive assembly**
Garnknüpferantrieb
Mécanisme d'entraînement pour un noueur

(30) Priority: 02.01.2002 US 34590
(43) Date of publication of application: 09.07.2003
(73) Proprietor: DEERE & COMPANY, Moline, Illinois 61265-8098 (US)
(72) Inventor: Murrey, Jeffrey, Lee, IA 52501, Ottumwa (US); Parker, Paul, David, IA 52501, Ottumwa (US); Rotole, David, Vincent, IA 52501, Ottumwa (US); Lang, Eric, Ryan, IA 52625, Donnellson (US); Roth, Darin, Ledru, IA 52501, Ottumwa (US); Story, Joseph, Eugene, MO 63501, Kirksville (US)
(74) Representative: Magin, Ludwig Bernhard

(56) References cited:
- DE-C- 947 268
- US-A- 4 108 062
- US-A- 5 782 175
- US-B1- 6 318 250

## Description

The present invention relates to a knotter drive arrangement for rectangular balers according to the preamble of claim 1.

The bales produced by rectangular balers are bound by a plurality of transversely spaced loops of twine. Either single knots, or, in order to reduce the amount of twine which has to be pulled about the bale, in the case of large bales, it is known practice to provide upper and lower sources of twine for producing the loops with the loops being tied together with two knots, one at each end of the bale. Two knots, one being at the upper front corner of a bale just completed and the other being at the upper rear corner of a bale just beginning to be formed, are tied during the same tying cycle.

An example of a baler having a knotting arrangement for producing two knots in each loop is disclosed in U.S. Patent No. 4,108,062, issued on 22 August1978. In this patented structure, a knotter drive sprocket is continuously driven and is coupled so as to be connected to a knotter drive shaft by a one-way clutch that is intermittently actuated in response to a bale being completed. This drive arrangement is not completely satisfactory in that it is relatively complex and costly, and its speed of operation is dependent upon that of the drive for the plunger and/or pick-up. A similar knotter arrangement is known from U.S. Patent No. 6,318,250 issued on 20 November 2001.

Problems associated with this prior art are the complicated and thus expensive structure.

This problem is solved by means of the inventive teaching according to claim 1, which provides several advantages and is even more sophisticated by means of features in the dependent claims.

By means of this invention a linear movement, which is easy to achieve with a linear actuator, transfers motion to said drive shaft which is transformed into rotational movement. The use of the one way clutch, which may be in the form of a circular hub driveable in one direction only, or by a cam with teeth acting in one direction only, make it simple to transfer motion over a desired path and a return of the actuator on the return path. Said powered device may be driven in one or in both directions by remote energy.

An energy storage device acting on the drive member enables to use a single acting powered device, since the energy storage device will perform the return of the powered device into its home position. Such an energy storage device can be implemented in the powered device, like in the form of a gas accumulator, or provided externally. Especially if the drive member is flexible, the energy storage device assures that it is kept tight and in engagement with the one-way clutch or the drive shaft.

A flexible drive element like a chain or cable does not need a long path and much space for its movement, but can be wound on or about the drive shaft. A chain has a constant positive locking connection to the driven part, which is helpful to achieve a synchronized drive.

Torsion springs, helical springs and other kinds of mechanical springs are simple in design, can be produced with little costs and are reliable. Tension springs as well as pressure springs, bending bar springs, etc. may be useful forms for such springs. Any type of mechanical spring may be used, which is able to return the powered device and/or to keep the drive member tight.

A sprocket and a mating drive member, like in the form of a chain or a tooth belt avoid any slippage in the drive connection.

The advantage in using a hydraulic or electric motor resides in its easy control and high forces.

If two runs of a chain, belt or cable extend about parallel to each other on both sides of the drive shaft, he drive member engages the drive shaft, the hub of the one-way clutch or any other rotating member about 180 degrees, which assures a secures transfer of motion.

A very compact design is achieved, if that said drive member is wrapped flexible on a reel of the one-way clutch and if said energy storage device is in the form of a coil torsion spring received on said drive shaft and having opposite ends respectively fixed to said support and to said reel.

Synchronization between the knotter drive and the movement of needles carrying the twine to tie a bale is achieve by a needle yoke having arms at opposite sides thereof which are respectively pivotally mounted about a transverse axis from a lowered standby position, to a raised twine-delivering position; and opposite ends of said knotter drive shaft being coupled to said arms for effecting movement of said needle yoke between a standby and twine-delivering position.

The subsequent drawings show two different embodiments of the invention, whereas:
- FIG. 1: is a somewhat schematic, right side view of a knotter drive arrangement constructed in accordance with the present invention and shown in solid lines in a standby position and in broken lines in a tying position,
- FIG. 2: is an enlarged top plan view of the left end portion of the knotter drive arrangement shown in FIG. 1, and
- FIG. 3: is a top plan view of an alternate embodiment, with parts being shown in section.

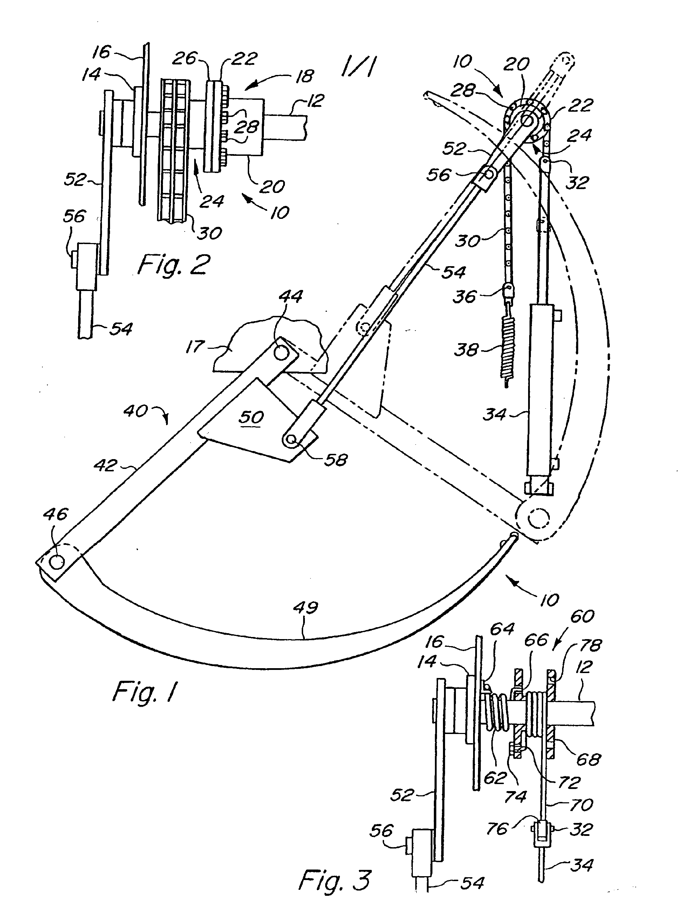

Referring now to FIGS. 1 and 2, there is shown a knotter drive assembly or arrangement 10 including a knotter drive shaft 12 having opposite end portions respectively mounted for rotation in respective bearing assemblies 14 mounted to vertical plates of a support 16 (only the left-hand bearing assembly and plate being shown) that are fixed to a bale case 17 forming part of a frame of a baler for forming rectangular bales. Not shown here are a plurality of identical knotter drive gears or knotters that are mounted on the drive shaft 12. The number of knotter drive gears is equal to the number of twine loops desired to be tied about a given bale. The tying cycle for the knotters requires the knotter drive shaft to be rotated approximately 360°.

Mounted on the knotter drive shaft 12 is a unidirectional or one-way drive clutch 18 including a hub 20 comprising an inner cylindrical member (not shown) fixed to the drive shaft 12 and an outer cylindrical member joined to a circular mounting flange 22. Located between the inner and outer cylindrical members of the hub 20, and establishing a one-way drive connection between them, is one or more unidirectional coupling elements (not shown), as is conventional with such one-way clutches 18.

Mounted for rotating freely about the knotter drive shaft 12, at a location between the support 16 and the one-way clutch 18 is a double drive sprocket 24 (FIG. 2) including a hub joined to a circular flange 26 that is provided with a circular pattern of threaded holes and is fixed to the mounting flange 22 of the one-way clutch 18 by a plurality of stud bolts 28. Engaged with the teeth of the two sprockets of the double sprocket 24 is a flexible drive member 30 in the form of a double-row roller chain. One end of the drive member 30 is coupled, as by a pin 32, to a rod end of an extensible and retractable powered device 34 in the form of a hydraulic actuator, and the other end the drive member 30 is coupled, as by a pin 36 to one end of a energy storage device 38 in the form of a coil tension spring. The powered device 34 and the energy storage device 38 are both oriented so as to be in a substantially vertical, tangential relationship respectively to opposite sides of the sprocket 24, with the cylinder end of the powered device 34 and an end of the energy storage device 38 that is remote from the drive member 30 both being fixed to a side location of the bale case 17.

A twine-handling assembly of a needle yoke 40 includes arms 42 at its opposite sides which are each pivotally mounted, as by pins 44, to opposite sides the bale case 17 for swinging vertically about a horizontal transverse pivot axis. Ends of the arms 42, that are remote from the pins 44, are provided with holes and extending between the arms 42 is a twine needle support bar 46 having opposite ends received in the holes provided in the arms and welded in place. Mounted to the middle section of the support bar 46 is a large end of each of a plurality of tapered, curved twine needles 49, the number of the needles 49 varying with the size of the bale being formed, but in no case less than two. Each arm 42 is provided with a forwardly projecting coupling plate 50 located adjacent the pivot pin 44. As shown in solid lines in FIG. 1, the needle yoke 40 is located in a standby position wherein the needles 49 are located beneath the bale case 17. The needle yoke 40 is pivoted vertically to a twine tying position, as shown in broken lines, wherein the needles 49 project upwardly through respective slots provided in the bale case 17 and respectively position a length of twine for being grabbed by an associated tying mechanism (not shown) as is conventional.

Provided for pivoting the needle yoke 40 in a timed relationship with the tying mechanisms is a drive coupling arrangement including a crank arm 52 fixed to each of opposite ends of the knotter drive shaft 12. The drive coupling arrangement further includes a connecting rod or drive link 54 having an upper end pivotally attached to each crank arm 52 by a pin 56, and a lower end pivotally attached to the coupling plate 50, of the adjacent needle yoke assembly arm 42, by a pin 58.

The powered device 34 and energy storage device 38 are both shown in solid lines in corresponding standby positions wherein the powered device 34 is substantially fully-extended and the energy storage device 38 is substantially fully-collapsed, with no or very little stored energy. The diameter of the sprocket 24, the length of the drive member 30 and the stroke of the powered device 34 are so chosen that, when the powered device 34 is fully retracted, the knotter drive shaft 12 will rotate approximately 360° so as to turn the knotter drive gears to effect one tying cycle. The first 180° of crank rotation results in the drive link 54 raising the needle yoke 40 to its fully-raised, twine-delivering position, and the second 180° of crank rotation results in the needle yoke 40 returning to its standby position. At this time, the powered device 34 is reset to its standby position by being actuated to extend, with the energy stored in the energy storage device 38 during contraction of the powered device 34 now acting to take up the slack in the drive member 30. It is conceivable that the powered device 34 could be designed as a single-acting actuator and the energy storage device 38 used to reset the powered device 34 to its extended standby position once a rod end of a cylinder is connected to sump by operation of a control valve, not shown. In any event, it is to be noted that the one-way clutch 18 free-wheels during extension of the powered device 34 so that the knotter drive shaft 12 and the needle yoke 40 remain in place.

While the most efficient use of the drive member 30 is that illustrated, it is conceivable that a longer length of drive member 30 in the form of a chain or so could be used with the end that is shown connected to the energy storage device 38 anchored to the bale case 17 and the energy storage device 38, or alternatively a spring biased idler sprocket, being coupled to an intermediate location of the drive member 30 so as to resiliently hold a sufficient length of the drive member 30 in reserve for effecting the desired 360° rotation of the knotter drive shaft 12.

Further, while the powered device 34 is here shown such that it pulls on the drive member 30 so as to load the energy storage device 38 during retraction of the powered device 34, it could of course be mounted so as to push the drive member 30 so as to load the energy storage device 38 during extension of the powered device 34.

The alternate embodiment disclosed in FIG. 3 will now be described with parts like those described above being assigned the same reference numerals.

Specifically, there is shown a knotter shaft drive arrangement 60 including an energy storage device 62 in the form of a torsion recoil spring received on the knotter drive shaft 12 and having a first end anchored to the support 16, as at a bracket 64, and a second end received in a hole 66 provided in, and thereby being anchored to an outer end member of a cable reel 68 that is rotatably mounted on the drive shaft 12. A flexible drive member 70 in the form of a length of a cable has one end received through a second hole 72 provided in the outer end of the reel 68 and is anchored to the reel 68 by a nut 74 received on a threaded ferrule fixed on the one end of the drive member 70. The drive member 70 is wrapped about the reel 68 and secured to a second end thereof is an eye member 76 that is received in a clevis provided at the end of the piston rod of the extensible and retractable hydraulic powered device 34. An inner end of the reel 68 contains a circular pattern of threaded holes 78 for receiving the bolts 28 so as to secure the one-way clutch 18 to the reel 68. The energy storage device 62 is shown in a relaxed, standby position, and the drive member 70 is shown in a wrapped standby position on the reel 68. At this time the powered device 34 would be fully extended and the needle yoke 40 would be in its lowered standby position.

In order to cause the needle yoke 40 to be pivoted to its raised, twine-delivering position, shown in broken lines in FIG. 1, the powered device 34 is retracted. This effects a pulling operation on the drive member 70 which unwinds from the reel 68 while causing the latter to rotate clockwise, as viewed from the left end of the drive shaft 12 shown in FIG. 3. Rotation of the reel 68 is transferred both to the energy storage member 62, which becomes wound tighter and stores energy, and to the one-way clutch 18 which transfers the rotation to the drive shaft 12 so as to cause the needle yoke 40 to pivot upwardly, during the first 180° of rotation, and then back to its starting position during the next 180° of rotation. The hydraulic powered device 34 is then actuated to extend, with the stored energy in the energy storage device 62 causing it to unwind and drive the reel 68 so as to take up the slack in the drive member 70. The one-way clutch 18 operates such that this rotation of the reel 68 is not transferred to the drive shaft 12. Thus, the needle yoke 40 remains in its lowered, standby position.

Other alternate embodiments where a linear output of a reversible powered device is used to cause a rotary output may be used in an assembly including an energy storage device coupled to store energy during the linear movement of the powered device 34, and including a one-way clutch 18 coupled for transferring the rotary movement to the knotter drive shaft 12, but turning freely when the energy storage device unloads to return the powered device 34 to its initial position. For example, it is conceivable that a linear powered device 34 having a follower mounted to an extensible output shaft could be used, with the follower being located in a spiral groove provided on the interior or the exterior of a cylindrical member so as to cause it to rotate during linear movement of the output shaft.

## Claims

1. Knotter drive arrangement (10) including a knotter drive shaft (12) and a one-way clutch 18 mounted on and coupled to the drive shaft (12), **characterised by** an at least in part linearly moveable drive member (30, 70) driving said one-way clutch (18) and a reversible powered device (34) coupled to said drive member (30, 70).

2. Knotter drive arrangement according to claim 1, **characterized by** an energy storage device (38, 62) being coupled to said drive member (30, 70) so as to store energy in response to said powered device (34) moving in a first direction from a starting position for moving said drive member (30, 70) in one direction, and so as to release energy and move said powered device (34) back to its starting position.

3. Knotter drive arrangement, according to claim 1 or 2, **characterized in that** said drive member (30, 70) is in the form of a flexible drive element, in particular a chain or cable.

4. Knotter drive arrangement, according to one or more of the previous claims, **characterized in that** said energy storage device (38, 62) being in the form of a spring, in particular a tension spring or a torsion spring, acting between a support (16) for the drive shaft (12) and the drive member (30, 70).

5. Knotter drive arrangement, according to one or more of the previous claims, **characterized by** a sprocket (24) on the drive shaft (12) for engagement with said drive member (30).

6. Knotter drive arrangement, according to one or more of the previous claims, **characterized in that** said powered device (34) is an extensible and retractable hydraulic or electric motor.

7. Knotter drive arrangement, according to one or more of the previous claims, **characterized in that** said drive member (30, 70) runs at least substantially tangential to said drive shaft 34 and in the case, in which it runs over said sprocket (24), it extends in particular substantially along parallel line.

8. Knotter drive arrangement, according to one or more of the previous claims, **characterized in that** said drive member (70) is wrapped flexible on a reel (68) of the one-way clutch (18) and **in that** said energy storage device (62) is in the form of a coil torsion spring received on said drive shaft (12) and having opposite ends respectively fixed to said support (16) and to said reel (68).

9. Knotter drive arrangement, according to one or more of the previous claims, **characterized in that** it further includes a needle yoke (40) having arms (42) at opposite sides thereof which are respectively pivotally mounted about a transverse axis from a lowered standby position, to a raised twine-delivering position; and opposite ends of said knotter drive shaft (12) being coupled to said arms (42) for effecting movement of said needle yoke (40) between a standby and twine-delivering position.

## Patentansprüche

1. Knüpferantriebsanordnung (10) mit einer Knüpferantriebswelle (12) und einer Freilaufkupplung (18), die an der Antriebswelle (12) befestigt und damit verbunden ist, **gekennzeichnet durch** ein zumindest teilweise linear bewegliches Antriebsglied (30, 70), das die Freilaufkupplung (18) antreibt, und eine mit dem Antriebsglied (30, 70) verbundene umkehrbar antreibbare Vorrichtung (34).

2. Knüpferantriebsanordnung nach Anspruch 1, **gekennzeichnet durch** eine Energiespeichervorrichtung (38, 62), die m it dem Antriebsglied (30, 70) verbunden ist, um Energie als Reaktion darauf zu speichern, dass sich die angetriebene Vorrichtung (34) aus einer Startposition in einer ersten Richtung bewegt, um das Antriebsglied (30, 70) in einer ersten Richtung zu bewegen, und Energie abzugeben und die angetriebene Vorrichtung (34) wieder in ihre Startposition zurück zu bewegen.

3. Knüpferantriebsanordnung nach Anspruch 1 oder 2, **dadurch gekennzeichnet, dass** das Antriebsglied (30, 70) in Form eines flexiblen Antriebselements, insbesondere einer Kette oder eines Kabels, vorliegt.

4. Knüpferantriebsanordnung nach einem oder mehreren der vorhergehenden Ansprüche, **dadurch gekennzeichnet, dass** die Energiespeichervorrichtung (38, 62) in Form einer Feder, insbesondere einer Zugfeder oder einer Torsionsfeder, vorliegt, die zwischen einem Träger (16) für die Antriebswelle (12) und dem Antriebsglied (30, 70) wirkt.

5. Knüpferantriebsanordnung nach einem oder mehreren der vorhergehenden Ansprüche, **gekennzeichnet durch** ein Kettenrad (24) auf der Antriebswelle (12) zum Eingriff mit dem Antriebsglied (30).

6. Knüpferantriebsanordnung nach einem oder mehreren der vorhergehenden Ansprüche, **dadurch gekennzeichnet, dass** die angetriebene Vorrichtung (34) ein aus- und einziehbarer Hydraulik- oder Elektromotor ist.

7. Knüpferantriebsanordnung nach einem oder mehreren der vorhergehenden Ansprüche, **dadurch gekennzeichnet, dass** das Antriebsglied (30, 70) zumindest im Wesentlichen tangential zur Antriebswelle (12) verläuft und sich in dem Fall, in dem es über das Kettenrad (24) verläuft, insbesondere im Wesentlichen entlang einer parallelen Linie erstreckt.

8. Knüpferantriebsanordnung nach einem oder mehreren der vorhergehenden Ansprüche, **dadurch gekennzeichnet, dass** das Antriebsglied (70) flexibel auf einer Rolle (68) der Freilaufkupplung (18) gewickelt ist und dass die Energiespeichervorrichtung (62) in Form einer Torsionsschraubenfeder auf der Antriebswelle (12) aufgenommen wird und einander gegenüberliegende Enden aufweist, die am Träger (16) bzw. an der Rolle (68) befestigt sind.

9. Knüpferantriebsanordnung nach einem oder mehreren der vorhergehenden Ansprüche, **dadurch gekennzeichnet, dass** sie weiterhin ein Nadeljoch (40) mit Armen (42) an einander gegenüberliegenden Seiten davon enthält, die jeweils aus einer abgesenkten Bereitschaftsposition in eine angehobene Garnabgabeposition um eine Querachse schwenkbar angebracht sind; und wobei einander gegenüberliegende Enden der Knüpferantriebswelle (12) mit den Armen (42) verbunden sind, um eine Bewegung des Nadeljochs (40) zwischen einer Bereitschafts- und einer Garnabgabeposition zu bewirken.

## Revendications

1. Dispositif d'entraînement de noueur (10) comprenant un arbre d'entraînement de noueur (12) et une roue libre (18) montée sur et couplée à l'arbre d'entraînement (12), **caractérisé par** un élément d'entraînement mobile (30, 70) au moins en partie de manière linéaire, entraînant ladite roue libre (18) et un dispositif motorisé réversible (34) couplé audit élément d'entraînement (30, 70).

2. Dispositif d'entraînement de noueur selon la revendication 1, **caractérisé par** un dispositif de stockage d'énergie (38, 62) qui est couplé audit élément d'entraînement (30, 70) afin de stocker de l'énergie en réponse audit dispositif motorisé (34) se déplaçant dans une première direction à partir d'une position de démarrage pour déplacer ledit élément d'entraînement (30, 70) dans une direction, et afin de libérer l'énergie et de ramener ledit dispositif motorisé (34) dans sa position de démarrage.

3. Dispositif d'entraînement de noueur, selon la revendication 1 ou 2, **caractérisé en ce que** ledit élément d'entraînement (30, 70) se présente sous la forme d'un élément d'entraînement flexible, en particulier une chaîne ou un câble.

4. Dispositif d'entraînement de noueur, selon une ou plusieurs des revendications précédentes, **caractérisé en ce que** ledit dispositif de stockage d'énergie (38, 62) se présente sous la forme d'un ressort, en particulier un ressort de tension ou un ressort de torsion, agissant entre un support (16) pour l'arbre d'entraînement (12) et l'élément d'entraînement (30, 70).

5. Dispositif d'entraînement de noueur, selon une ou plusieurs des revendications précédentes, **caractérisé par** un pignon (24) sur l'arbre d'entraînement (12) pour la mise en prise avec ledit élément d'entraînement (30).

6. Dispositif d'entraînement de noueur, selon une ou plusieurs des revendications précédentes, **caractérisé en ce que** ledit dispositif motorisé (34) est un moteur électrique ou hydraulique extensible et rétractable.

7. Dispositif d'entraînement de noueur, selon une ou plusieurs des revendications précédentes, **caractérisé en ce que** ledit élément d'entraînement (30, 70) s'étend au moins sensiblement de manière tangentielle par rapport audit arbre d'entraînement (34) et dans le cas dans lequel il s'étend sur ledit pignon (24), il s'étend en particulier sensiblement le long de la ligne parallèle.

8. Dispositif d'entraînement de noueur, selon une ou plusieurs des revendications précédentes, **caractérisé en ce que** ledit élément d'entraînement (70) est enroulé flexiblement sur un enrouleur (68) de la roue libre (18) et **en ce que** ledit dispositif de stockage d'énergie (62) se présente sous la forme d'un ressort de tension hélicoïdal reçu sur ledit arbre d'entraînement (12) et ayant des extrémités opposées fixées respectivement sur ledit support (16) et sur ledit enrouleur (68).

9. Dispositif d'entraînement de noueur, selon une ou plusieurs des revendications précédentes, **caractérisé en ce qu'**il comprend en outre une fourche à aiguille (40) ayant des bras (42) au niveau de ses cotés opposés qui sont montés de manière pivotante respectivement autour d'un axe transversal à partir d'une position d'attente basse jusqu'à une position de distribution de ficelle élevée ; et des extrémités opposées dudit arbre d'entraînement de noueur (12) étant couplées audit bras (42) pour effectuer le mouvement de ladite fourche à aiguille (40) entre une position d'attente et de distribution de ficelle.
